Europäisches Patentamt

European Patent Office

Office européen des brevets

(19)

(11) EP 0 873 021 A1

(12) DEMANDE DE BREVET EUROPEEN

(43) Date de publication:
21.10.1998 Bulletin 1998/43

(51) Int Cl.⁶: **H04N 9/31**, H04N 5/74, H04N 9/12

(21) Numéro de dépôt: 98400916.7

(22) Date de dépôt: 14.04.1998

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **18.04.1997 FR 9704832**

(71) Demandeur: **THOMSON-CSF**
**75008 Paris (FR)**

(72) Inventeurs:
• **Huignard, Jean-Pierre,**
**Thomson-CSF Prop. Intel.**
**94117 Arcueil cedex (FR)**
• **Loiseaix. Brigitte, Thomson-CSF Prop. Intel.**
**94117 Arcueil cedex (FR)**
• **Laude, Vincent, Thomson-CSF Prop. Intel.**
**94117 Arcueil cedex (FR)**

(54) **Système d'illumination d'un écran de visualisation**

(57) L'invention concerne un système d'illumination d'un écran de visualisation comportant plusieurs ensembles (M1, M2, ...) d'éléments images juxtaposés ou quasi-juxtaposés situés sensiblement selon une même surface. Il comporte une source d'illumination (S) divergente par ensemble d'éléments images et un écran de projection (E). La divergence de chaque source et sa distance (S) aux éléments images sont adaptées à la distance (D) des éléments images à l'écran (E) de manière à réaliser une image globale continue dans le plan de l'écran (E).

De plus, on prévoit entre les ensembles d'éléments images (M1, M2) et l'écran (E), des lentilles (LE 1, LE2) imageant la source sur l'écran.

Application : réalisation d'un mur d'images.

SOURCE ÉLÉMENTAIRE D'ÉCLAIRAGE D'UN LCD

FAISCEAU DE FIBRES DE DISTRIBUTION 1 × n × m

SOURCE UNIQUE

FIG.4

Printed by Jouve, 75001 PARIS (FR)

EP 0 873 021 A1

**Description**

L'invention concerne un système d'illumination d'un écran de visualisation.

Plus particulièrement, l'invention concerne un système de visualisation par transparence d'un écran constitué de modulateurs spatiaux de lumière tels qu'un écran à cristaux liquides, lequel écran est constitué de la juxtaposition de matrices élémentaires de dimensions réduites.

L'invention permet de réaliser un grand écran à partir de l'association de matrices actives trichromes de format standard réalisées selon les technologies industrielles connues.

Le dispositif de l'invention permet la réalisation d'un écran de grande dimension par l'association de plusieurs écrans élémentaires en s'affranchissant des difficultés liées aux raccordements des limites des différents écrans élémentaires. On s'affranchit également des limites physiques liées aux structures d'écrans monolithiques notamment les transmissions de signaux électriques sur les électrodes de commande de grande dimension, l'homogénéité de la couche de cristal liquide sur une surface de l'ordre du mètre carré et la commande d'un grand écran (circuits de commande, fabrication des transistors de commande).

L'invention concerne donc un système d'illumination d'un écran de visualisation comportant plusieurs ensembles d'éléments images juxtaposés ou quasi-juxtaposés situés sensiblement selon une même surface, caractérisé en ce qu'il comporte une source d'illumination par ensemble d'éléments images et un écran diffusant, les ensembles d'éléments images étant situés entre les sources et l'écran diffusant de telle façon que les images contenues dans les ensembles d'éléments images soient projetées sur l'écran.

Ce système comporte, entre l'ensemble d'éléments images et l'écran, des lentilles permettant d'imager la source sur l'écran, à raison d'une lentille par élément image ou par groupe d'éléments images.

Les différents objets et caractéristiques de l'invention apparaîtront plus clairement dans la description qui va suivre et dans les figures annexées qui représentent:

- les figures 1a à 1c, un exemple de réalisation simplifié selon l'invention ;
- la figure 2, un dessin explicatif de fonctionnement ;
- la figure 3, un autre exemple de réalisation de l'invention ;
- les figures 4 et 5, des exemples de réalisation plus détaillés du système de l'invention.

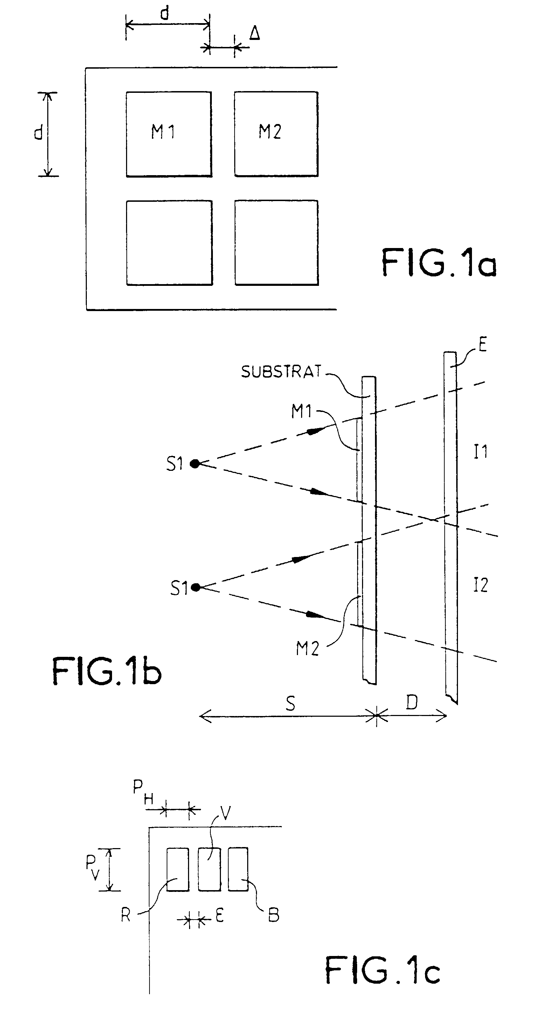

En se reportant aux figures 1a et 1b, on va décrire un exemple de réalisation selon l'invention.

Le schéma proposé pour l'invention est montré sur la figure 1a. On réalise sur un substrat transparent un réseau de N x N matrices actives M1, M2 d'élément images. Chaque matrice a pour dimension élémentaire d x d (figure 1a). $\Delta$ est la distance entre les matrices non jointives. Chaque matrice active (écran) supposée de format carré pour cet exemple est éclairée par une source S1, S2, ... de faible étendue géométrique du type lampe à arc court halogénure métallique, ou extrémité de fibre optique multimode couplée au rayonnement issu de la lampe à arc. Chaque source S1, S2 éclaire de façon homogène une matrice M1, M2 de surface $d^2$ et est placée à la distance S de cette matrice. Selon l'invention, on réalise à la distance D des écrans M1, M2 le raccordement des images $I_1$, $I_2$. Selon le schéma de la figure 1b, l'image $I_1$ résulte de l'image projetée sans lentille de l'écran M1 sur l'écran E.

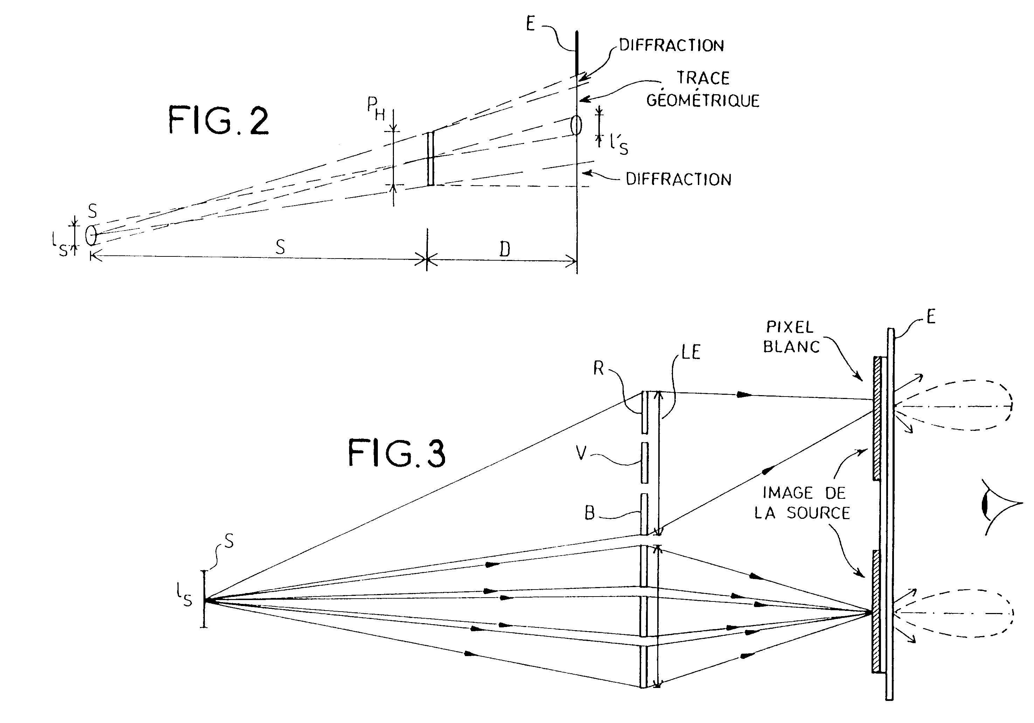

Chaque écran M1, M2 ou matrice active est constituée par un réseau de pixels électrooptiques ayant la géométrie indiquée sur la figure 1c. Chaque pixel peut être muni d'un filtre coloré rouge, vert ou bleu pour la présentation d'une image couleur et possède des dimensions géométriques $p_V$ et $p_H$. Le taux de remplissage de chaque matrice est limité à des valeurs pouvant atteindre 60 % compte tenu de la surface occupée sur le substrat par les électrodes et le transistor de commande. Le principe d'éclairage et d'imagerie sans lentille de la figure 1b constitue une solution à la juxtaposition d'images si chaque pixel rouge, vert, bleu (RVB) de la matrice $M_i$ se projette géométriquement sur l'écran E. Pour cela les sources d'éclairage S1, S2 sont quasi-ponctuelles. Cependant, compte tenu des dimensions des pixels de la matrice active, 50 à 80 $\mu$m dans la plus petite dimension, typiquement, les effets de diffraction interviennent et la taille de la source diminue la résolution donc le contraste image dans le plan de l'écran E. L'influence de la diffraction sur le transfert d'image des pixels RVB dans le plan de l'écran E est montrée schématiquement sur la figure 3. Chaque pixel génère une tache de largeur respective $\frac{\lambda}{P_H} \times D$ ; $\frac{\lambda}{P_V} \times D$ avec $\lambda = \lambda_R, \lambda_V, \lambda_B$. L'image sans lentille dans le plan E s'obtient par la convolution entre la projection de la source de largeur $\ell'_s$ (surface $\ell'^2_s$) et la réponse diffractive de la pupille de dimension $P_V$ et $P_H$. Dans ces conditions, la largeur totale à mi-hauteur de la tache vaut de l'ordre :

$$\ell \approx \frac{1}{2} \times P_H \left[ \left(1 + \frac{D}{S}\right) + \frac{D}{S}\ell_S \right] + \frac{\lambda}{P_H}D$$

soit :

$$\ell \approx \left( \frac{\ell_S}{2S} + \frac{\lambda}{P_H} + \frac{P_H}{2S} \right) D + \frac{1}{2} P_H$$

avec $\ell_S$ dimension de la source d'éclairage de surface $\ell_S^2$.

Dans ces conditions de réalisation d'une image, la largeur totale de la tache trichrome dans le plan de l'écran E résulte de la superposition des trois pixels R, V, B défocalisés. La qualité de l'image dépendra de la taille des zones de recouvrement R et V et V et B dans le plan horizontal. Dans l'autre plan la dimension $P_V$ étant plus grande (de l'ordre de 3 $P_H$) les effets de diffraction seront moins marqués, et l'élargissement du pixel dépendra principalement du diamètre de la source. Typiquement, ce dispositif permet d'envisager un grandissement entre les écrans M1, M2 et l'écran E de 5 % tout en conservant une MTF > 0,5.

A titre d'exemple, on donne ici les ordres de grandeurs nécessaires à la réalisation de ce dispositif pour présenter une image à haute résolution.

Compte tenu d'une taille d'image recherchée (> 50 cm) et de la distance d'observation d'un tel écran dans une application informatique par exemple (entre 50 cm et 1 m), la taille du point blanc à présenter doit être inférieure à 280 µm pour rester du même ordre de grandeur que la résolution oculaire. Le dispositif suivant constitué de 4 écrans à cristaux liquides qui permet de réaliser une image de 560 x 560 mm² au pas de 275 µm a les caractéristiques suivantes :

- Chaque écran à cristal liquide possède :

  - 14,8" de diagonale
  - une résolution de 1024 x 1024 pixels
  - des tailles de pixels RVB de 260 x 260 µm²

- Distance source/écran (M1, M2) = 260 mm
  Distance LCD/écran E : D = 20 mm
  Grandissement : 1,058

- Séparation entre écrans M1, M2 adjacents : 15,3 mm

La qualité de l'image présentée sur l'écran dépend de la taille de la source d'illumination caractérisée par son étendue $E_S$. Dans le tableau suivant, on donne quelques caractéristiques de l'image présentée :

| | 5 mm².sr | 10 mm².sr |
|---|---|---|
| Etendue de la source élémentaire Es | | |
| Taille de la source $\ell_s$ | 1,73 mm | 2 mm |
| Dimension géométrique de l'image défocalisée d'un pixel | ± 187 µm | ± 221 µm |
| Agrandissement par la diffraction | ± 143 µm | ± 153 µm |
| Largeur à mi-hauteur du pixel image | 330 | 373 |
| Taux de modulation βH | 0,48 | inexploitable |

On définit ici le taux de modulation β de l'image par la relation suivante :

$$\beta = \frac{I_{max} - I_{min}}{I_{max} + I_{min}}$$

Où I représente l'intensité obtenue dans le plan de l'écran lorsque le LCD est commandé de telle sorte qu'un pixel sur deux soit à l'état de transmission maximale, l'autre étant dans l'état de transmission nulle.

La figure 3 représente une variante de l'invention qui associe au plan de chaque écran M1, M2 un réseau de lentilles LE1, LE2, ... permettant d'obtenir dans le plan de l'écran E l'équivalent d'un "pixel blanc" où les trois couleurs RVB sont superposées. A chaque groupe de trois pixels RVB est associée une lentille LE1, LE2, ... dont la pupille couvre les trois pixels. Chaque lentille image la source S sur l'écran E. De cette façon, les trois couleurs issues d'un groupe de trois pixels RVB se superposent sur l'écran E. L'écran E est diffusant de telle façon que chaque point d'éclairement de l'écran donne un point lumineux diffusant vers l'observateur.

Dans ces conditions, la largeur totale de la tache à mi-hauteur est uniquement liée à la convolution de la tache de diffraction du sous-pixel élémentaire par l'image de la source d'éclairage, soit dans la direction horizontale où les effets de diffraction sont prépondérants :

$$I = \left( \frac{\ell_s}{2S} + \frac{\lambda}{P_H} \right) \times D$$

Si D représente la focale de chaque microlentille, l'image obtenue dans le plan de l'écran présente un grandissement g qui vaut

$$\left( 1 + \frac{D}{S} \right).$$

Dans cette variante du dispositif, il est possible d'ajuster de manière indépendante le grandissement et la résolution de l'image finale en jouant sur l'étendue de la source et la focale des microlentilles.

A titre d'exemple, on peut réaliser, sur l'écran E, une image de 560 x 560 mm$^2$ au pas de 275 μm par raccordement de 4 écrans LCD de 14,8" constitués de pixel blanc de 260 μm.

Le grandissement nécessaire de 1,058 peut être réalisé avec un dispositif dont les caractéristiques géométriques sont identiques au premier dispositif si la focale des microlentilles correspond à la distance D (D = 20 mm). On donne dans le tableau les caractéristiques de l'image en fonction de l'étendue de la source utilisée :

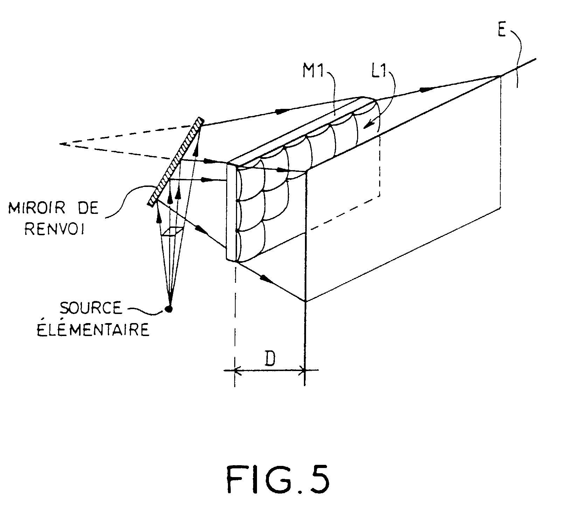

La figure 5 représente une variante du système d'éclairage de l'écran permettant de réduire l'épaisseur de l'ensemble. Ce système prévoit un miroir de renvoi associé à chaque écran M1, M2. Une source lumineuse éclaire ce miroir de renvoi selon une direction sensiblement parallèle à l'écran.

| | 5 mm$^2$.sr | 20 mm$^2$.sr |
|---|---|---|
| Etendue de la source élémentaire $E_s$ | 5 mm$^2$.sr | 20 mm$^2$.sr |
| Taille de la source élémentaire $\ell_s$ | 1,73 mm | 3,5 mm |
| Dimension géométrique de l'image d'un pixel | ± 50μm | ± 100 μm |
| Elargissement par la diffraction | ± 143 μm | ± 143 μm |
| Largeur à mi-hauteur du pixel image | 193 | 243 |
| Taux de modulation βH | 0,80 | 0,80 |

Les dispositifs proposés permettent de présenter des images de grande taille sans développer d'écrans LCD spécifiques, en utilisant un assemblage matriciel de N x M écrans LCD de type informatiques (diagonale > 10 inchs).

L'utilisation d'un éclairage divergent permet de réaliser sur l'écran un micro-agrandissement de chaque LCD de la mosaïque, ce qui permet de laisser entre les écrans un espace disponible pour l'électronique de commande (drivers lignes et colonnes) de chaque LCD. La mosaïque dans ces conditions n'est donc pas limitée au raccordement de 4 écrans.

L'utilisation d'un dispositif d'éclairage à base de points sources, issus par exemple d'une fibre permet d'assurer le positionnement relatif de chaque image par réglage de la position spatiale de ces points sources. On peut prévoir de positionner les sources de manière à obtenir un recouvrement des images de deux LCD adjacents. Dans ces conditions, les inhomogénéités de luminance dans les zones de raccordement peuvent être corrigées par l'électronique d'adressage des LCD.

On prévoit donc des moyens pour déplacer ces sources indépendamment les unes des autres parallèlement ou perpendiculairement au plan des écrans LCD. Dans la mesure où les grandissements des images des écrans LCD sont bien réglés, le déplacement des sources parallèlement au plan des écrans LCD permet de régler le recouvrement (ou les joints) entre images obtenues sur l'écran E. A ce sujet, selon un mode de réalisation préféré de l'invention, les positions des sources seront réglées de façon à ce que les images se chevauchent sur l'écran de façon à uniformiser la luminance sur l'écran.

De plus, selon une variante de réalisation selon l'invention, on prévoit que les images se chevauchent les unes les autres de façon à avoir pour deux images voisines au moins une rangée de pixels de chaque image qui se superpose sur l'écran. Ces rangées seront alors commandées pour afficher les mêmes informations.

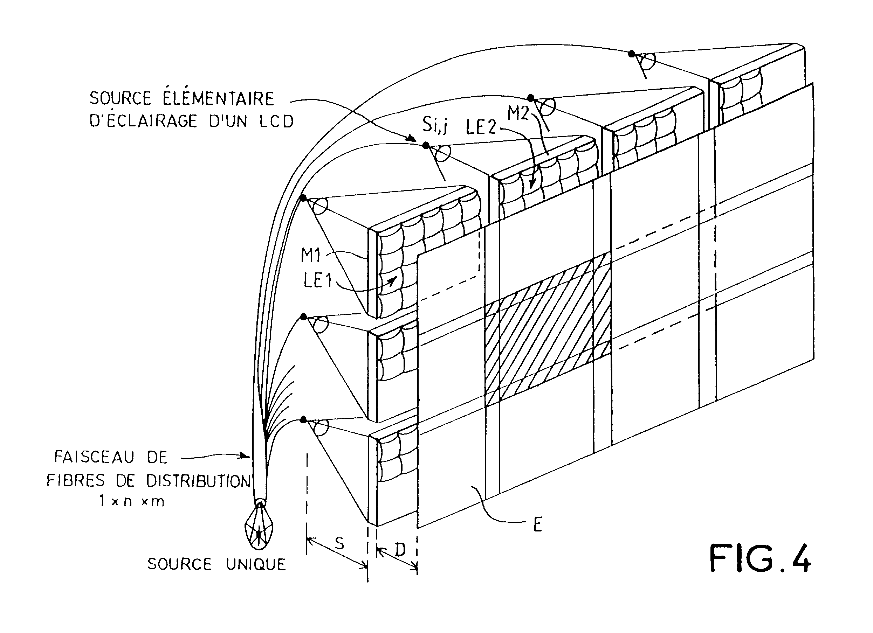

L'utilisation d'une source d'éclairage couplée dans un faisceau de fibres optiques de type 1 entrée et $N^2$ sorties (avec $N^2$ = nombre d'écrans LCD de la mosaïque) présente les avantages suivants (figure 4) :

- utilisation de sources classiques telles que des sources à base d'halogénures métalliques d'étendue géométriques > 20 mm$^2$.sr ;
- homogénéisation de l'éclairement de la source sur l'ensemble des LCD ;
- réalisation d'un dispositif de faible encombrement où la source est déportée.

L'ensemble du dispositif peut être intégré dans une structure compacte grâce à l'utilisation de miroirs de renvoi et de la distribution de la source par le faisceau de fibres optiques (figure 5).

**Revendications**

1. Système d'illumination d'un écran de visualisation comportant plusieurs ensembles (M1, M2, ...) d'éléments images juxtaposés ou quasi-juxtaposés situés sensiblement selon une même surface, caractérisé en ce qu'il comporte une source d'illumination divergente par ensemble d'éléments images et un écran de projection (E), les ensembles d'éléments images étant situés entre les sources et l'écran, la divergence de chaque source et sa distance (S) aux éléments images étant adaptées à la distance (D) des éléments images à l'écran (E) de manière à réaliser une image globale continue dans le plan de l'écran (E) constituée par les images élémentaires résultant de la projection des ensembles d'éléments images.

2. Système d'illumination selon la revendication 2, caractérisé en ce qu'un groupe d'éléments images comporte au moins un élément image rouge, un élément image vert et un élément image bleu.

3. Système d'illumination selon la revendication 2, caractérisé en ce que chaque élément image comporte au moins trois sous-éléments (R, V, B) de forme rectangulaire, dont la longueur est pour un triplet de l'ordre de trois fois la largeur, ces sous-éléments étant juxtaposés par leurs grands côtés, de manière à former un pixel carré.

4. Système d'illumination selon la revendication 1, caractérisé en ce qu'il comporte, entre les ensembles d'éléments images et l'écran, des lentilles permettant d'imager la source sur l'écran, à raison d'une lentille (LE1, LE2) par élément image ou par groupe d'éléments images colorés.

5. Système d'illumination selon la revendication 1, caractérisé en ce que les ensembles d'éléments images sont des matrices d'éléments images de mêmes dimensions.

6. Système d'illumination selon l'une des revendications 1 ou 3, caractérisé en ce qu'il comporte des moyens pour déplacer chaque source perpendiculairement à la surface des ensembles d'éléments images.

7. Système d'illumination selon l'une des revendications 1 ou 2, caractérisé en ce qu'il comporte des moyens pour déplacer chaque source dans un plan parallèle à la surface des ensembles d'éléments images.

8. Système d'illumination selon la revendication 1, caractérisé en ce que la source comporte un ensemble de fibres optiques éclairées chacune par une première extrémité, une deuxième extrémité de chaque fibre étant positionnée dans un plan parallèle à la surface des ensembles d'éléments images de façon à ce que chacune éclaire un ensemble d'éléments images.

9. Système selon la revendication 1, caractérisé en ce que les différentes images élémentaires voisines projetées sur l'écran (E) se chevauchent de façon à homogénéiser la luminance de l'image globale continue obtenue sur l'écran.

10. Système selon la revendication 8, caractérisé en ce qu'il comporte un faisceau de fibres éclairées toutes à l'aide d'une source unique, > pour l'une de leurs extrémités.

11. Système selon la revendication 9, caractérisé en ce que les différentes images élémentaires voisines se chevauchent de façon à avoir au moins une rangée d'éléments de chaque image élémentaire qui se superpose avec une rangée d'éléments de l'image élémentaire voisine ; et en ce qu'il comporte des moyens de commande pour afficher les mêmes informations sur les rangées de pixels des ensembles images destinées à être superposées sur l'écran.

FIG.1a

FIG.1b

FIG.1c

EP 0 873 021 A1

# FIG.2

DIFFRACTION

TRACE GÉOMÉTRIQUE

$P_H$

$l'_S$

DIFFRACTION

E

S

$l_S$

S

D

# FIG.3

R

LE

V

B

S

$l_S$

PIXEL BLANC

E

IMAGE DE LA SOURCE

EP 0 873 021 A1

SOURCE ÉLÉMENTAIRE
D'ÉCLAIRAGE D'UN LCD

Si,j   LE2   M2

M1
LE1

FAISCEAU DE
FIBRES DE DISTRIBUTION
$1 \times n \times m$

SOURCE UNIQUE

S   D

E

FIG.4

FIG.5

**Office européen des brevets**

**RAPPORT DE RECHERCHE EUROPEENNE**

Numéro de la demande

EP 98 40 0916

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | WO 90 12384 A (DASCO) 18 octobre 1990<br><br>* page 4, ligne 4 - page 7, ligne 28 *<br>--- | 1,2,5,<br>8-11 | H04N9/31<br>H04N5/74<br>H04N9/12 |
| X | US 5 469 187 A (YANIV) 21 novembre 1995<br>* colonne 9, ligne 66 - colonne 10, ligne 64 *<br>--- | 1,2 | |
| X | GB 2 273 846 A (SONY) 29 juin 1994<br>* page 5, ligne 26 - page 6, ligne 18 *<br>--- | 1,2,5 | |
| A | EP 0 491 662 A (OIS OPTICAL IMAGING SYSTEMS) 24 juin 1992<br>* abrégé; figures 2,4 *<br>--- | 1 | |
| A | US 5 576 725 A (SHIMADA) 19 novembre 1996<br>* abrégé; figures 5,18,19,21,22 *<br>--- | 1 | |
| A | WO 93 11452 A (MAGNASCREEN CORPORATION) 10 juin 1993<br>* abrégé; figure 2A *<br>--- | 1 | DOMAINES TECHNIQUES RECHERCHES (Int.Cl.6) |
| A | US 4 365 869 A (HARENG & AL.) 28 décembre 1982<br>* abrégé; figure 1 *<br>--- | 1 | H04N |
| A | US 4 263 594 A (MASUCCI) 21 avril 1981<br>* abrégé; figure 1 *<br>--- | 1 | |
| A | US 4 330 813 A (DEUTSCH) 18 mai 1982<br>* abrégé; figure 1 *<br>--- | 1 | |
| A | "LIQUID CRYSTAL DISPLAY FOR COLOR-MATCHING APPLICATIONS"<br>IBM TECHNICAL DISCLOSURE BULLETIN,<br>vol. 34, no. 10B, 1 mars 1992,<br>pages 353-354, XP000302759<br>--- | 1 | |

-/--

Le présent rapport a été établi pour toutes les revendications

| Lieu de la recherche | Date d'achèvement de la recherche | Examinateur |
|---|---|---|
| LA HAYE | 19 juin 1998 | Pigniez, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numéro de la demande

EP 98 40 0916

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN vol. 18, no. 535 (E '1615! , 12 octobre 1994 & JP 06 189239 A (TOSHIBA CORP) * abrégé * | 1 | |
| A | PATENT ABSTRACTS OF JAPAN vol. 15, no. 480 (P-1284), 5 décembre 1991 & JP 03 208001 A (NIPPON TELEGR) * abrégé * | 1 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 19 juin 1998 | Pigniez, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)